(19) Europäisches Patentamt
European Patent Office
Office européen des brevets

(11) **EP 4 692 187 A1**

(12) **EUROPEAN PATENT APPLICATION**
published in accordance with Art. 153(4) EPC

(43) Date of publication:
**11.02.2026 Bulletin 2026/07**

(21) Application number: **24780920.5**

(22) Date of filing: **29.03.2024**

(51) International Patent Classification (IPC):
*C08J 9/04* (2006.01)   *B32B 5/18* (2006.01)
*B32B 7/022* (2019.01)   *B32B 27/00* (2006.01)
*C08J 9/02* (2006.01)   *C09J 7/26* (2018.01)
*C09J 7/29* (2018.01)   *C09J 201/00* (2006.01)

(52) Cooperative Patent Classification (CPC):
**B32B 5/18; B32B 7/022; B32B 27/00; C08J 9/02;
C08J 9/04; C09J 7/26; C09J 7/29; C09J 201/00**

(86) International application number:
**PCT/JP2024/013350**

(87) International publication number:
**WO 2024/204827 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023059542**

(71) Applicant: **Sekisui Chemical Co., Ltd.
Osaka-shi, Osaka 530-8565 (JP)**

(72) Inventors:
• **TSUCHIYA, Kento
Hasuda-shi, Saitama 349-0198 (JP)**
• **MATSUKAWA, Hiroki
Mishima-gun, Osaka 618-0021 (JP)**

(74) Representative: **Ter Meer Steinmeister & Partner
Patentanwälte mbB
Nymphenburger Straße 4
80335 München (DE)**

(54) **FOAM SHEET AND ADHESIVE TAPE**

(57) A foam sheet has a tensile strength of from 1 to 9 MPa and a breaking strength of 3.5 MPa or less when an interlaminar strength is measured, wherein the foam sheet does not break when an interlaminar strength is measured and has an overall thickness of from 0.05 to 0.9 mm.

Fig. 3

EP 4 692 187 A1

**EP 4 692 187 A1**

**Description**

Technical Field

The present invention relates to a foam sheet and a pressure-sensitive adhesive tape in which the foam sheet is used as a base material.

Background Art

In recent years, with the increase in the size of displays used in information terminals such as smartphones, tablets, personal computers, and in televisions and the like, and the rapid spread of OLEDs, it has been common for a display panel used in these applications to be removed for repair and then reinstalled after being repaired. Such a display panel is generally fixed to the housing of an electronic device by a pressure-sensitive adhesive tape.

As a specific example of the pressure-sensitive adhesive tape, for example, PTL1 discloses a pre-photocuring adhesive sheet that is formed from a resin composition containing a (meth)acrylic copolymer (A), a crosslinking agent (B), and a photopolymerization initiator (C), which is photocurable and satisfies each predetermined requirement relating to shape retention, self-adhesiveness, and viscosity. Furthermore, PTL1 discloses that, in response to the problem of display unevenness on the display panel due to distortion in the display panel caused by irregularities such as steps on the adherend that cannot be absorbed by the pressure-sensitive adhesive tape, such display unevenness can be improved by improving the flexibility of the adhesive sheet.

In addition, many pressure-sensitive adhesive tapes have been proposed that use a foam sheet as a base material. For example, PTL2 discloses a multilayer foam sheet that includes a base material layer composed of a foam layer and a surface layer composed of a foam layer or a resin film laminated on at least one surface of the base material layer, and a pressure-sensitive adhesive tape in which a pressure-sensitive adhesive material is provided on at least one surface of the multilayer foam sheet. Furthermore, PTL3 discloses a multilayer foam sheet having a resin layer and a foam layer on both surfaces of the resin layer, and a pressure-sensitive adhesive tape including a pressure-sensitive adhesive material on at least one surface of the multilayer foam sheet.

Citation List

Patent Literature

PTL1: WO 2016/194957 A1
PTL2: WO 2022/080219 A1
PTL3: WO 2022/030649 A1

Summary of Invention

Technical Problem

Moreover, as televisions become larger and devices equipped with high-quality OLED panels become more widespread, there is an increasing need to temporarily remove display panels, for example, when recovering a non-faulty display panel from a faulty device so that the non-faulty display panel can be mounted on another device for reuse, or when repairing these devices so that they can be used again. In addition, in recent years, as televisions and the like have become thinner from a viewpoint of design and the like, the pressure-sensitive adhesive tape needs to be thin in order to fix the display panels inside the television, for example.

Therefore, a pressure-sensitive adhesive tape is required to have the ability to be easily peeled off without leaving an adhesive residue on the display panel while at the same time being thin. Accordingly, in order to be able to easily peel off the pressure-sensitive adhesive tape, the present inventors considered, for example, tearing the inside of the base material of the tape in the plane direction, so-called "slicing", and then peeling off the remaining tape.

However, when trying to perform slicing using a conventional pressure-sensitive adhesive tape, because the conventional pressure-sensitive adhesive tape is not intended to be removed by slicing in the first place, the pressure-sensitive adhesive tape could not be easily peeled from the panel without leaving a pressure-sensitive adhesive material on the panel. Specifically, a pressure-sensitive adhesive tape that uses a foam having a low expansion ratio as the base material of the pressure-sensitive adhesive tape has the problem that the base material cannot be torn in the plane direction, and step followability (flexibility) and the like, which originally are necessary, are lost, making it impossible to use such a pressure-sensitive adhesive tape for fixing panels such as those in televisions. On the other hand, with a pressure-sensitive adhesive tape that uses a foam having a high expansion ratio as the base material of the pressure-sensitive adhesive tape, although it is possible to tear the base material in the plane direction, when the foam with the pressure-sensitive adhesive material that remains on the display panel is subsequently peeled off, there is a problem that, for example, due to the low tensile strength of the foam, the foam is pulled by the pressure-sensitive adhesive material and the foam is torn or shredded during the peeling, making it difficult to peel it off successfully.

Therefore, an object of the present invention is to provide a foam sheet that is thin and can be easily peeled off without leaving any pressure-sensitive adhesive material on an adherend.

Solution to Problem

As a result of intensive studies, the present inventors have found that the above-described problem can be solved by keeping both the tensile strength of the foam sheet and the breaking strength when an interlaminar strength is measured equal to or less than a certain level, and by keeping the overall thickness within a predetermined range.

That is, the present invention provides the following [1] to [13].

[1] A foam sheet having a tensile strength of from 1 to 9 MPa and a breaking strength when an interlaminar strength is measured of 3.5 MPa or less,
the foam sheet having an overall thickness of from 0.05 to 0.9 mm.
[2] The foam sheet according to [1], wherein the foam sheet has a 25% compressive strength of 150 kPa or less.
[3] The foam sheet according to [1], wherein the foam sheet has an overall density of from 0.07 to 0.60 g/cm$^3$.
[4] The foam sheet according to any of [1] to [3], including:

a core layer which is a foam; and
an outer layer that is provided on both surfaces of the core layer and is a foam having an expansion ratio lower than that of the core layer or is a non-foam.

[5] The foam sheet according to [4], wherein the expansion ratio of the core layer is from 5 to 20 times.
[6] The foam sheet according to [4] or [5], wherein a thickness ratio of the core layer to the outer layer (thickness of the core layer/average thickness of the outer layer) is 2 or more.
[7] The foam sheet according to any of [4] to [6], wherein the core layer has a closed cell ratio of 90% or more.
[8] The foam sheet according to any of [4] to [7], wherein each of the outer layers has a thickness of 5 μm or more.
[9] The foam sheet according to any of [4] to [8], wherein an average cell size of cells in the core layer is from 20 to 500 μm.
[10] The foam sheet according to any of [4] to [9], wherein the core layer is a crosslinked foam.
[11] The foam sheet according to [10], wherein the core layer has a gel fraction of from 20 to 50% by mass.
[12] The foam sheet according to any of [4] to [11], wherein a resin constituting the core layer is at least one selected from the group consisting of a polyolefin resin, a urethane resin, an acrylic resin, and an elastomeric resin.
[13] A pressure-sensitive adhesive tape including the foam sheet according to any one of [1] to [12] and a pressure-sensitive adhesive material provided on at least one surface of the foam sheet.

Advantageous Effects of Invention

According to the present invention, it is possible to provide a foam sheet that not only has good step followability, but is also thin and can be easily peeled off without leaving any pressure-sensitive adhesive material on an adherend.

Brief Description of Drawings

[Fig. 1] Fig. 1 is a schematic diagram illustrating an example of the structure of a foam sheet according to the present invention.
[Fig. 2] Fig. 2 is a schematic diagram illustrating an example of the structure of a pressure-sensitive adhesive tape according to the present invention.
[Fig. 3] Fig. 3 is a schematic diagram illustrating a breaking strength measurement device.

Description of Embodiments

[Foam sheet]

The foam sheet according to the present invention has a tensile strength of from 1 to 9 MPa, a breaking strength when an interlaminar strength is measured (hereinafter also simply referred to as "breaking strength") of 3.5 MPa or less, and a thickness of the overall foam sheet of from 0.05 to 0.9 mm. By having the above-described structure, when the foam sheet according to the present invention is used as a base material for a pressure-sensitive adhesive tape, for example, the pressure-sensitive adhesive tape can be easily peeled off from an adherend without leaving any pressure-sensitive adhesive material on the adherend by tearing the foam sheet in a plane direction with a cutter or the like when peeling off the pressure-sensitive adhesive tape, and then peeling off the portion of the pressure-sensitive adhesive tape remaining on the adherend.

The foam sheet is now described more detail below.

<Tensile strength>

When the tensile strength of the foam sheet is less than 1 MPa, when the foam sheet is peeled off, the foam sheet is also pulled by the pressure-sensitive adhesive material and breaks, making it difficult to peel off the foam sheet cleanly. Moreover, when the tensile strength is more than 9 MPa, the breaking strength becomes larger than a predetermined value, and it is difficult to tear the foam sheet in the plane direction before peeling off the foam sheet. In addition, flexibility and step followability may be reduced. In view of these points, the tensile strength is preferably from 1.2 to 8.5 MPa, and more preferably from 1.3 to 5 MPa.

The tensile strength can be measured by the method described in the Examples.

<Thickness>

When the thickness of the overall foam sheet is more than 0.9 mm, the thickness of the foam sheet is increased, and it is difficult to use the foam sheet inside thin electronic devices and the like. Furthermore, when the overall thickness is less than 0.05 mm, there will not be a sufficient gap for cutting into the foam sheet with a cutter or the like, and so it will not be possible to tear the foam sheet in the plane direction, and it will be difficult to impart excellent peelability to the foam sheet. In view of these points, the overall thickness is preferably from 0.07 to 0.8 mm, and more preferably from 0.12 to 0.5 mm.

<Breaking strength>

As described above, the foam sheet according to the present invention has a breaking strength of 3.5 MPa or less, but when the breaking strength exceeds 3.5 MPa, the foam sheet cannot be torn in the plane direction, and it is difficult to impart excellent peelability to the foam sheet. From this viewpoint, the breaking strength is preferably 3.2 MPa or less, and more preferably 3 MPa or less.

Furthermore, from the viewpoint of imparting a certain mechanical strength to the foam sheet and, when used as the base material of a pressure-sensitive adhesive tape, preventing a panel fixed by the tape from falling, the breaking strength is preferably 0.1 MPa or more, more preferably 0.3 MPa or more, and further preferably 0.5 MPa or more.

The breaking strength can be measured when an interlaminar strength is measured by the method described in the Examples.

<25% Compressive strength>

The foam sheet according to the present invention preferably has a 25% compressive strength of 150 kPa or less, more preferably 100 kPa or less, and further preferably 70 kPa or less. When the 25% compressive strength is equal to or less than the above upper limit value, the foam sheet has good flexibility and excellent step followability. Furthermore, even when the foam sheet is sandwiched between members inside an electronic device such as a television, the load on the members is reduced, making it easier to prevent problems with the electronic device.

On the other hand, from the viewpoint of imparting a certain mechanical strength to the foam sheet, the 25% compressive strength is preferably 10 kPa or more, more preferably 15 kPa or more, and further preferably 20 kPa or more.

The 25% compressive strength can be measured by the method described in the Examples.

<Density>

The density of the overall foam sheet is preferably from 0.07 to 0.60 $g/cm^3$, more preferably from 0.10 to 0.50 $g/cm^3$, and further preferably from 0.20 to 0.45 $g/cm^3$. When the density of the overall foam sheet is equal to or more than the above lower limit value, a certain tensile strength is imparted to the foam sheet, making it difficult for the foam sheet to be torn by the pressure-sensitive adhesive material during peeling.

On the other hand, when the density of the overall foam sheet is equal to or less than the above upper limit value, the breaking strength of the foam sheet will be at or less than a certain level, and so the core layer will tend to tear in the plane direction before the foam sheet is peeled off. In addition, excellent step followability can be imparted more easily to the foam sheet.

As used herein, density means the apparent density, including the above-mentioned overall density. Moreover, the apparent density can be measured by the method described in the Examples together with the expansion ratio described later.

<Structure>

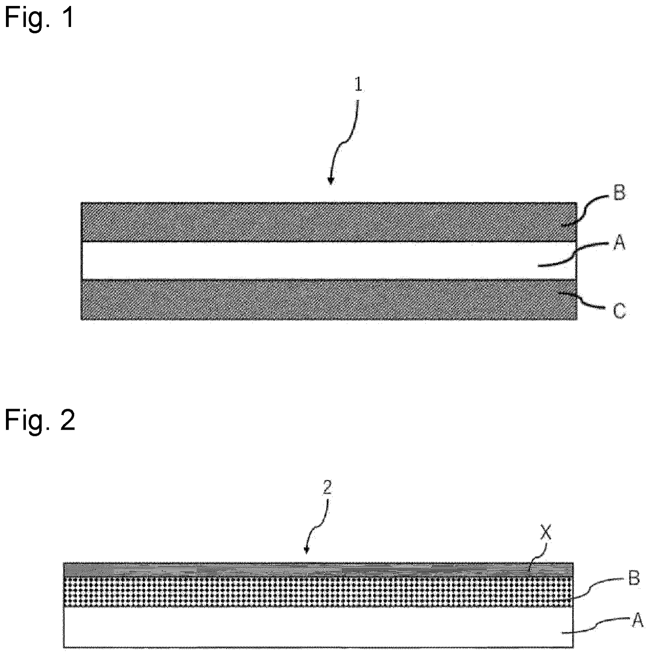

The foam sheet according to the present invention may be constituted by a single core layer composed of a foam, or may include an outer layer on at least one surface of the core layer composed of a foam. When an outer layer is included, the foam sheet may be a multilayer body that includes the outer layer on only one surface of the core layer, or may be a multilayer body that includes the outer layer on both surfaces of the core layer. However, as illustrated in Fig. 1, a multilayer body 1 that includes outer layers B and C on both surfaces of a core layer A is preferred.

By providing an outer layer on both surfaces of the core layer, it is easier to increase the tensile strength of the foam sheet. Therefore, in a case where the foam sheet is used as the base material of a pressure-sensitive adhesive tape, when the core layer is torn in the plane direction and the tape is then peeled from the adherend, the tape is prevented from breaking during peeling, and excellent peelability can be exhibited. Furthermore, even when a pressure-sensitive adhesive material is provided on both surfaces of the foam sheet, excellent peelability can be exhibited.

In addition, the outer layer is preferably directly laminated on the core layer, but the out layer may be laminated via an adhesive layer or the like.

The outer layer may be a foam layer composed of a foam, or may be a non-foam layer composed of a non-foam. In addition, when the outer layer is a foam layer, it suffices that the expansion ratio is lower than that of the foam layer constituting the core layer. In the present invention, the outer layer is preferably a non-foam. By using a non-foam, the tensile strength of the foam sheet tends to be enhanced, the foam sheet tends to be prevented from breaking during peeling, and excellent peelability tends to be easily exhibited.

[Core layer (foam)]

The foam constituting the core layer will now be described in more detail below.

<Expansion ratio>

The core layer foam has an expansion ratio of preferably from 5 to 20 times, and more preferably from 5.2 to 15 times, and further preferably from 6 to 8.5 times. When the expansion ratio is equal to or more than the above lower limit value, the breaking strength of the foam sheet tends to be equal to or less than a certain level, and it becomes easier to tear the core layer in the plane direction before the foam sheet is peeled off. In addition, it is easier to impart excellent step followability to the foam sheet.

On the other hand, when the expansion ratio is equal to or less than the above upper limit value, a certain tensile strength tends to be imparted to the foam sheet, making it more difficult for the sheet to be torn by the pressure-sensitive adhesive material during peeling. In addition, when the foam sheet includes an outer layer, during the manufacturing process, the outer layer may be compressed and stretched due to the expansion of the expandable composition that is the raw material of the core layer, but by having an expansion ratio that is equal to or less than the above upper limit value, stretching is suppressed, making it easier to maintain the tensile strength of the overall foam sheet to a certain level or higher.

<Average cell size>

The core layer preferably has an average cell size of from 20 to 500 $\mu$m, more preferably from 30 to 300 $\mu$m, and further preferably from 35 to 200 $\mu$m. When the average cell size is equal to or more than the above lower limit value, it is easier to impart excellent peelability and step followability to the foam sheet. It is also easier to tear along the plane direction.

On the other hand, when the average cell size is equal to or less than the above upper limit value, a certain tensile strength is imparted to the foam sheet, making it easier to impart excellent peelability to the foam sheet. In addition, it is easier to make the foam sheet thinner.

As used herein, average cell size refers to the maximum value among the average value of the cell size in the MD (Machine Direction) direction, the average value of the cell size in the TD (Transverse Direction) direction, and the average value of the cell size in the ZD (direction perpendicular to both MD and TD) direction.

In the core layer, the average cell size in the MD direction is preferably from 15 to 450 $\mu$m, more preferably from 25 to 250 $\mu$m, and further preferably from 30 to 150 $\mu$m. Furthermore, the average cell size in the TD direction is preferably from 20 to 500 $\mu$m, more preferably from 30 to 300 $\mu$m, and further preferably from 35 to 200 $\mu$m. In addition, the average cell size in the ZD direction is preferably from 5 to 100 $\mu$m, more preferably from 10 to 70 $\mu$m, and further preferably from 15 to 50 $\mu$m.

These average cell sizes can be measured by the method described in the Examples.

<Closed cell ratio>

The core layer preferably has a closed cell ratio of 70% or more, more preferably 80% or more, and further preferably 90% or more. The upper limit of the closed cell ratio is not particularly limited, and may be 100%. When the closed cell ratio is equal to or more than the above lower limit value, it is easier to impart excellent step followability. Furthermore, since the shear strength of the core layer is increased, there is also the advantage that, for example, when the foam sheet is incorporated and used in an electronic device such as a television, problems such as the core layer tearing and the panel falling can be prevented.

The closed cell ratio can be measured by the method described in the Examples.

<Crosslinking degree>

The core layer is preferably a crosslinked foam. Specifically, the crosslinking degree (gel fraction) of the core layer is preferably from 20 to 50% by mass, and more preferably from 30 to 45% by mass. By setting the crosslinking degree of the core layer within the above range, the mechanical strength, flexibility, shock absorption properties, and the like of the foam sheet tend to be easily enhanced. Moreover, it is possible to appropriately expand the core layer. The method for measuring the crosslinking degree is as follows.

About 100 mg of a test piece is collected from the core layer, and a mass A (mg) of the test piece is accurately weighed. Next, this test piece is immersed in 30 cm$^3$ of xylene at 120°C and left for 24 hours, then filtered through a 200 mesh wire mesh, the undissolved matter on the wire mesh is collected, vacuum dried, and accurately weighed as a mass B (mg) of the undissolved matter. From the obtained values, the crosslinking degree (% by mass) was calculated using the following formula.

Crosslinking degree (% by mass)=100$\times$(B/A)

The thickness of the core layer is preferably from 0.03 to 0.7 mm, more preferably from 0.05 to 0.5 mm, and further preferably from 0.08 to 0.3 mm. When the thickness of the core layer is equal to or more than the above lower limit value, a sufficient gap for cutting into the core layer with a cutter or the like is ensured, and so that the foam sheet can be torn in the plane direction, making it easier to impart excellent peelability to the foam sheet. Furthermore, when the thickness of the core layer is equal to or less than the above upper limit value, the thickness of the overall foam sheet can be made reduced, and it is easier to suitably use the foam sheet inside a thin electronic device and the like.

<Resin>

The resin constituting the core layer of the present invention is preferably at least one selected from the group consisting of a polyolefin resin, a urethane resin, an acrylic resin, and an elastomeric resin.

(Polyolefin resin)

Examples of the polyolefin resin include a polyethylene resin, a polypropylene resin, and an ethylene-vinyl acetate copolymer. Among these, a polyethylene resin is preferred. Examples of the polyethylene resin include a polyethylene resin polymerized with a polymerization catalyst such as a Ziegler-Natta compound, a metallocene compound, and a chromium oxide compound. Among them, a polyethylene resin polymerized with a metallocene compound as polymerization catalyst is preferred.

Furthermore, as the polyethylene resin, a linear low-density polyethylene is preferred. By using a linear low-density polyethylene, high flexibility is imparted to the foam sheet, and the thickness of the foam sheet can be reduced. Furthermore, the linear low-density polyethylene is more preferably a linear low-density polyethylene obtained by copolymerizing ethylene (for example, 75% by mass or more, preferably 90% by mass or more based on the total monomer amount) and a small amount of $\alpha$-olefin as necessary.

Specific examples of the α-olefin include propylene, 1-butene, 1-pentene, 4-methyl-1-pentene, 1-hexene, 1-heptene, and 1-octene, and among these, an α-olefin having from 4 to 10 carbon atoms is preferred.

The density of the polyethylene resin, for example, the above-described linear low-density polyethylene, is preferably from 0.870 to 0.910 g/cm$^3$, more preferably from 0.875 to 0.907 g/cm$^3$, and further preferably from 0.880 to 0.905 g/cm$^3$. As the polyethylene resin, a plurality of polyethylene resins may be used. Moreover, a polyethylene resin having a density other than that in the above-described range may be added.

(Metallocene compound)

Examples of the metallocene compound include a compound such as a bis(cyclopentadienyl) metal complex having a structure in which a transition metal is sandwiched between π-electron system unsaturated compounds. More specifically, examples include a compound in which one or more cyclopentadienyl rings or analogs thereof are present as ligands in a tetravalent transition metal such as titanium, zirconium, nickel, palladium, hafnium, and platinum.

In such a metallocene compound, the properties of the active sites are uniform, and each active site has the same degree of activity. Polymers synthesized using a metallocene compound have a highly uniform molecular weight, molecular weight distribution, composition, composition distribution, and the like, and so when a sheet containing a polymer synthesized using a metallocene compound is crosslinked, the crosslinking proceeds uniformly. A uniformly crosslinked sheet will foam in a uniform manner, and thus the physical properties of the sheet tend to be more stable. In addition, since the sheet can be stretched uniformly, the thickness of the foam sheet can be made uniform.

Examples of the ligand include a cyclopentadienyl ring and an indenyl ring. These cyclic compounds may be substituted with a hydrocarbon group, a substituted hydrocarbon group, or a hydrocarbon-substituted metalloid group. Examples of the hydrocarbon group include a methyl group, an ethyl group, various propyl groups, various butyl groups, various amyl groups, various hexyl groups, a 2-ethylhexyl group, various heptyl groups, various octyl groups, various nonyl groups, various decyl groups, various cetyl groups, and a phenyl group. It is noted that "various" means the various isomers including n-, sec-, tert-, and iso-.

Furthermore, a polymerized oligomer of a cyclic compound may be used as the ligand.

In addition, in addition to the π-electron system unsaturated compound, a monovalent anion ligand such as chlorine and bromine or divalent anion chelate ligand, a hydrocarbon, an alkoxide, an arylamide, an aryloxide, an amide, an arylamide, a phosphide, an arylphosphide, and the like may be used.

Examples of the metallocene compound containing a tetravalent transition metal and a ligand include cyclopentadienyl titanium tris(dimethylamide), methylcyclopentadienyl titanium tris(dimethylamide), bis(cyclopentadienyl) titanium dichloride, and dimethylsilyltetramethylcyclopentadienyl-t-butylamide zirconium dichloride.

When combined with a specific co-catalyst (catalyst aid), the metallocene compound functions as a catalyst for the polymerization of various olefins. Examples of the specific co-catalyst include methylaluminoxane (MAO), and a boron compound. The proportion of the co-catalyst to the metallocene compound used is preferably from 100,000 to 1,000,000 times by mole, and more preferably 50 to 5,000 times by mole.

When using the above-described linear low-density polyethylene as the polyolefin resin, the above-mentioned linear low-density polyethylene may be used alone, or may be used in combination with another polyolefin resin other than the linear low-density polyethylene. For example, the linear low-density polyethylene may be used in combination with a polyolefin resin, described later, other than the polyethylene resin. When using in combination with another polyolefin resin, the proportion of the other polyolefin resin to the linear low-density polyethylene (100% by mass) is preferably 40% by mass or less, more preferably 30% by mass or less, and further preferably 20% by mass or less.

Examples of the ethylene-vinyl acetate copolymer used as the polyolefin resin include an ethylene-vinyl acetate copolymer containing 50% by mass or more of ethylene.

Furthermore, examples of the polypropylene resin include homopolypropylene, and a propylene-α-olefin copolymer containing preferably 70% by mass or more, and more preferably 90% by mass or more, of propylene. These may be used alone or in combination of two or more.

Specific examples of the α-olefin constituting the propylene-α-olefin copolymer include ethylene, 1-butene, 1-pentene, 4-methyl-1-pentene, 1-hexene, 1-heptene, and 1-octene. Among these, an α-olefins having from 6 to 12 carbon atoms is preferred.

Furthermore, when a polyolefin resin is used as the resin, the resin may be a polyolefin resin used alone, or the resin may contain a resin other than the polyolefin resin. The proportion of the polyolefin resin to the total amount of resin is preferably 60% by mass or more, more preferably 70% by mass or more, and further preferably 80% by mass or more. As the resin other than the polyolefin resin used in combination with the polyolefin resin, among the resins described above, a resin other than a polyolefin resin may be used, but it is preferred to use an elastomeric resin.

(Urethane resin)

As the urethane resin, a reaction product of a polyol and a polyisocyanate can be suitably used.

The polyol is not particularly limited, and can be appropriately selected depending on the purpose. Examples of the polyol include a polyester polyol, a polyether polyol, and a polycarbonate polyol. These may be used alone or in combination of two or more.

Examples of the polyester polyol include a polyester obtained by esterifying a low-molecular-weight polyol and a polycarboxylic acid, a polyester obtained by ring-opening polymerization of a cyclic ester compound such as ε-caprolactone, and copolymerized polyesters thereof.

Examples of the low-molecular-weight polyol that can be used in the production of the polyester polyol include an aliphatic alkylene glycol having a weight average molecular weight of about 50 to 300, such as ethylene glycol, propylene glycol, 1,4-butanediol, 1,6-hexanediol, diethylene glycol, neopentyl glycol, and 1,3-butanediol, and cyclohexanedimethanol.

Examples of the polycarboxylic acid include an aliphatic dicarboxylic acid such as succinic acid, adipic acid, sebacic acid, and dodecanedicarboxylic acid, an aromatic dicarboxylic acid such as terephthalic acid, isophthalic acid, phthalic acid, and naphthalenedicarboxylic acid, and anhydrides or esters thereof.

Examples of the polyether polyol include a polyether polyol obtained by addition polymerization of an alkylene oxide using one or more compounds having two or more active hydrogen atoms as an initiator.

As the polycarbonate polyol, for example, a polycarbonate polyol obtained by reacting a carbonate ester and/or phosgene with a low-molecular-weight polyol described below can be used.

Examples of the carbonate ester include methyl carbonate, dimethyl carbonate, ethyl carbonate, diethyl carbonate, cyclocarbonate, and diphenyl carbonate.

Examples of the low-molecular-weight polyol that can be used to produce the polycarbonate polyols and that can react with the carbonate ester and/or phosgene include ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, 1,4-cyclohexanedimethanol, hydroquinone, resorcinol, bisphenol A, bisphenol F, and 4,4'-biphenol.

The polyisocyanate is not particularly limited, and can be appropriately selected depending on the purpose. For example, an alicyclic polyisocyanate, an aliphatic polyisocyanate, and an aromatic polyisocyanate can be used, and an example includes an alicyclic polyisocyanate. These may be used alone or in combination of two or more.

Examples of the alicyclic polyisocyanate include isophorone diisocyanate, 1,3-bis(isocyanatomethyl)cyclohexane, 4,4'-dicyclohexylmethane diisocyanate, 2,4-methylcyclohexane diisocyanate, 2,6-methylcyclohexane diisocyanate, cyclohexylene diisocyanate, methylcyclohexylene diisocyanate, bis(2-isocyanatoethyl)-4-cyclohexylene-1,2-dicarboxylate, 2,5-norbornane diisocyanate, 2,6-norbornane diisocyanate, a dimer acid diisocyanate, and bicycloheptane triisocyanate. These may be used alone or in combination of two or more.

(Acrylic resin)

As the acrylic resin, a polymer containing a (meth)acrylate monomer unit and optionally further containing another monomer unit can be used.

As used herein, the expression that the polymer "contains a monomer unit" means that "a repeating unit derived from a monomer is contained in the polymer obtained by using the monomer." Moreover, as used herein, "(meth)acrylate" means acrylate and/or methacrylate.

Here, the (meth)acrylate monomer unit is a repeating unit derived from a (meth)acrylate monomer. Examples of the (meth)acrylate monomer include, but not particularly limited to, (meth)acrylic acid alkyl ester monomers such as methyl (meth)acrylate, ethyl (meth)acrylate, n-propyl (meth)acrylate, n-butyl (meth)acrylate, sec-butyl (meth)acrylate, n-heptyl (meth)acrylate, n-hexyl (meth)acrylate, n-octyl (meth)acrylate, 2-ethylhexyl (meth)acrylate, and n-dodecyl (meth)acrylate, and (meth)acrylic acid alkoxyalkyl ester monomers such as 2-methoxyethyl (meth)acrylate, 3-methoxypropyl (meth)acrylate, 3-methoxybutyl (meth)acrylate, and ethoxymethyl (meth)acrylate.

The (meth)acrylate monomer may be used alone or in combination of two or more. In addition, as used herein, "(meth)acrylic" means acrylic and/or methacrylic.

Examples of the other monomer unit include, but not particularly limited to, a repeating unit derived from an unsaturated carboxylic acid monomer, a repeating unit derived from a vinyl cyanide monomer, and a repeating unit derived from an alkenyl aromatic monomer.

(Elastomeric resin)

Examples of the elastomeric resin include an acrylonitrile butadiene rubber, an ethylene-propylene-diene rubber (EPDM), an ethylene-propylene rubber (EPM), a natural rubber, a polybutadiene rubber, a polyisoprene rubber, a styrene rubber, a silicone rubber, and an acrylic rubber. The styrene rubber may be a random copolymer as long as the random copolymer is a polymer of styrene and a conjugated diene compound, or may be a hydrogenated product thereof. Specifically, examples of the styrene rubber include a styrene-butadiene copolymer (SBR) or a hydrogenated product (HSBR) thereof.

Examples of the elastomeric resin also include a thermoplastic elastomer. Examples of the thermoplastic elastomer include an olefin thermoplastic elastomer, a styrene thermoplastic elastomer, a vinyl chloride thermoplastic elastomer, a polyurethane thermoplastic elastomer resin, a polyester thermoplastic elastomer, and a polyamide thermoplastic elastomer.

For the elastomer, the above components may be used alone, or in combination of two or more. The elastomer is preferably a thermoplastic elastomer. Furthermore, from the viewpoint of easily adjusting a tensile storage modulus, a rate of change in the tensile storage modulus, a sheet restoration rate, and the like within the above ranges, a silicone rubber, an olefin thermoplastic elastomer, and a styrene thermoplastic elastomer are more preferable. In addition, the above-described rubbers and elastomers may be mixed together, or compatible thermoplastic resins may be mixed and used as described later.

Examples of the olefin thermoplastic elastomer include a blended type, a dynamically crosslinked type, and a polymerized type. More specifically, examples include a thermoplastic elastomer obtained by using a thermoplastic crystalline polyolefin such as polypropylene and polyethylene for the hard segment, and a completely vulcanized or partially vulcanized rubber for the soft segment.

Examples of the thermoplastic crystalline polyolefin include a homopolymer of an α-olefin having from 1 to 4 carbon atoms or a copolymer of two or more α-olefins, and polyethylene or polypropylene is preferred. Examples of the soft segment component include a butyl rubber, a halobutyl rubber, EPDM, EPM, an acrylonitrile/butadiene rubber, NBR, and a natural rubber, and among these, EPDM is preferred.

The olefin thermoplastic elastomer used in the present invention is preferably an olefin thermoplastic elastomer that can be produced by dynamic crosslinking, in which micro island phases of EPDM are formed in the polypropylene phase. When such an olefin thermoplastic elastomer is used, although the reason is not clear, the sheet restoration rate, as well as the rate of change in the tensile storage elastic modulus, and the like can be adjusted within the predetermined ranges regardless of whether the resin foam sheet is crosslinked or not. Examples of commercially available thermoplastic elastomers include "Prime TPO" manufactured by Prime Polymer Co., Ltd. and "EXCELINK 4700P" manufactured by JSR Corporation.

In addition, examples of the olefin thermoplastic elastomer also include a block copolymer type. Examples of the block copolymer type include a thermoplastic elastomer having a crystalline block and a soft segment block, and more specifically, examples include a crystalline olefin block-ethylene-butylene copolymer-crystalline olefin block copolymer (CEBC). In the CEBC, the crystalline olefin block is preferably a crystalline ethylene block, and commercially available products of such CEBCs include "DYNARON 6200P" manufactured by JSR Corporation.

Examples of the styrene thermoplastic elastomer include a block copolymer having a styrene polymer or a copolymer block and a conjugated diene compound polymer or a copolymer block. Examples of the conjugated diene compound include isoprene and butadiene.

The styrene thermoplastic elastomer used in the present invention may or may not be hydrogenated. When the styrene thermoplastic elastomer is hydrogenated, the hydrogenation can be performed by a known method.

The styrene thermoplastic elastomer is usually a block copolymer, such as a styrene-isoprene block copolymer, a styrene-isoprene-styrene block copolymer, a styrene-butadiene block copolymer, a styrene-butadiene-styrene block copolymer, a styrene-ethylene/butylene-styrene block copolymer (SEBS), a styrene-ethylene/propylene-styrene block copolymer (SEPS), a styrene-ethylene/butylene block copolymer (SEB), a styrene-ethylene/propylene block copolymer (SEP), or a styrene-ethylene/butylene-crystalline olefin block copolymer (SEBC).

The styrene thermoplastic elastomer mentioned above is preferably a block copolymer, and among them, SEBS and SEBC are more preferable.

Examples of commercially available styrene thermoplastic elastomers include products manufactured by JSR Corporation under the trade names "DYNARON 8600P" (styrene content: 15% by mass), "DYNARON 4600P" (styrene content: 20% by mass), and "DYNARON 1321P" (styrene content: 10% by mass).

The resin constituting the foam sheet according to the present invention is, among the above-described resins, more preferably at least one selected from the group consisting of a polyolefin resin, a urethane resin, and an elastomeric resin, further preferably a polyolefin resin, still further preferably an ethylene resin, and particularly preferably an ethylene resin polymerized with a metallocene compound. By using a polyolefin resin for the core layer, the generation of resin debris is suppressed when the foam sheet is torn in the plane direction, and it becomes easier to prevent the occurrence of defects in the electronic device caused by foreign matter contamination due to the debris. Furthermore, the use of these specific types of resins also has the effect of making it easier to peel off the foam sheet cleanly when the foam sheet is peeled off. In addition, it is easier to enhance step followability.

<Foaming agent>

The foam sheet according to the present invention is preferably a foam obtained by expanding an expandable composition that contains the above-described resin and a foaming agent. The foam obtained by this expansion is constituted by a foam having therein a large number of cells composed of air bubbles obtained by using the resin alone or the resin mixed with additives as required as a matrix resin.

Examples of the foaming agent include a thermally decomposable foaming agent, and as the thermally decomposable foaming agent, an organic foaming agent or an inorganic foaming agent can be used. Usually, the thermally decomposable foaming agent that is used has a decomposition temperature that is higher than the melting temperature of the resin. For example, a thermally decomposable foaming agent having a decomposition temperature of from 140 to 270°C may be used.

Specific examples of the organic foaming agent include an azo compound such as azodicarbonamide, an azodicarboxylic acid metal salt (barium azodicarboxylate and the like), and azobisisobutyronitrile, a nitroso compound such as N,N'-dinitrosopentamethylenetetramine, a hydrazine derivative such as hydrazodicarbonamide, 4,4'-oxybis(benzenesulfonyl hydrazide), and toluenesulfonyl hydrazide, and a semicarbazide compound such as toluenesulfonyl semicarbazide.

Examples of the inorganic foaming agent include ammonium carbonate, sodium carbonate, ammonium hydrogen carbonate, sodium hydrogen carbonate, ammonium nitrite, sodium borohydride, and anhydrous monosodium citrate.

Among these, from the viewpoint of obtaining fine cells, economy, and safety, an azo compound is preferred, and azodicarbonamide is particularly preferred. These thermally decomposable foaming agents can be used alone or in combination of two or more.

The amount of the thermally decomposable foaming agent blended in the expandable composition is, with respect to 100 parts by mass of the resin, preferably from 0.5 to 20 parts by mass, more preferably from 1 to 15 parts by mass, and further preferably from 1 to 10 parts by mass.

When using a polyolefin resin, an acrylic resin, or an elastomeric resin as the resin, it is preferred to use the above-described thermally decomposable foaming agent as the foaming agent. However, as the foaming agent, a foaming agent other than the thermally decomposable foaming agent may be used. For example, when using a urethane resin, water, an organic halogen compound, and the like are preferably used as the foaming agent. Examples of the organic halogen compound include an organic chlorine compound and an organic fluorine compound, and an organic fluorine compound is preferred. Examples of the organic fluorine compound include a hydrofluorocarbon (HFC) and a hydrofluoroolefin (HFO), which may further contain a chlorine atom.

Furthermore, a physical foaming agent may be used as the foaming agent. As the physical foaming agent, it is preferred to use a high-pressure inert gas. The inert gas is not particularly limited as long as the gas is inert to the resin composition, and can impregnate the resin composition. Examples thereof include carbon dioxide, butane gas, nitrogen gas, and air. These gases may be mixed and used. Among these, from the viewpoint of easily increasing the expansion ratio of the foam, carbon dioxide and butane gas are preferred. The inert gas used for the impregnation is preferably in a supercritical or subcritical state.

<Other additives>

The foam sheet or expandable composition may optionally contain additives commonly used in foams, such as an antioxidant, a heat stabilizer, a colorant, a flame retardant, an antistatic agent, a filler, and a decomposition temperature regulator. Among these, it is preferred to use an antioxidant and a decomposition temperature regulator.

Specific compounds as the decomposition temperature regulator include zinc oxide, zinc stearate, and urea. The content of the decomposition temperature regulator is, with respect to 100 parts by mass of the resin, preferably 0.01 to 5 parts by mass, and more preferably 0.1 to 3 parts by mass.

[Outer layer]

When the outer layer is a non-foam, the outer layer may be a non-foam resin layer, or may be a layer of paper or the like other than a resin layer. The resin constituting the outer layer is not particularly limited as long as the resin can prevent the foam sheet from breaking during peeling, and a polyolefin resin, a polyester resin such as polyethylene terephthalate, a styrene acrylate resin, an elastomeric resin, an acrylic resin, and the like can be used.

Among the above, a polyolefin resin and a polyester resin are preferred, and a polyolefin resin is more preferred. The polyolefin resin is as described above in relation to the foam, and a polyethylene resin is more preferable. The polyolefin resin used for the core layer and the polyolefin resin used for the outer layer may be the same or different, but it is preferred to use the same polyolefin resin. By using the same polyolefin resin, it is easier to increase the adhesive strength between the core layer and the outer layer, and it is possible to prevent interfacial peeling from occurring. Moreover, when producing the foam sheet by the first production method described later, the resin which constitutes the outer layer is preferably a polyolefin resin, and a polyethylene resin is more preferable.

Furthermore, in the foam sheet produced by the second manufacturing method, the resin used for the outer layer is preferably a polyolefin resin or a polyester resin, and among them, a polyethylene resin, a polypropylene resin, and a polyethylene terephthalate is more preferable.

In the foam sheet produced by the second production method, the resin layer used for the outer layer may be an oriented film or a non-oriented film. For example, when using a propylene resin, it is also preferred to use an OPP film.

When the outer layer is a foam, it is sufficient when the expansion ratio of the foam constituting the outer layer is lower than the expansion ratio of the foam constituting the core layer. Specifically, the expansion ratio of the outer layer is preferably greater than 1 time and less than 5 times, more preferably from 1.1 to 4 times, and further preferably from 1.1 to 2 times.

When the outer layer is a foam, the resin constituting the outer layer is the same as the resin constituting the core layer described above, and a description thereof will be omitted here. Furthermore, the closed cell ratio and crosslinking degree may also be the same as for the core layer described above.

In addition, appropriate additives may be added to the resin of the outer layer. The additives used may be the same as those used in the core layer.

(Thickness of outer layer)

The thickness of the outer layer included in the foam sheet according to the present invention is preferably 5 $\mu$m or more, more preferably 6 $\mu$m or more, and further preferably 10 $\mu$m or more. In addition, the thickness of the outer layer is preferably 300 $\mu$m or less, more preferably 100 $\mu$m or less, and further preferably 40 $\mu$m or less. When the thickness of the outer layer is equal to or more than the above lower limit value, a tensile strength is imparted to the foam sheet by the outer layer, the foam sheet can be prevented from being torn when peeling off from the adherend, and it is easier to impart excellent peelability to the foam sheet. Moreover, when the thickness of the outer layer is equal to or less than the above upper limit value, the thickness of the overall foam sheet can be reduced, and it is easier to suitably use the foam sheet in thin electronic devices.

When the foam sheet has a structure in which the outer layer is provided on both surfaces of the core layer, the thickness of the outer layer means the thickness of each outer layer. For example, when the thickness of each outer layer is 5 $\mu$m or more, then both of the outer layers are 5 $\mu$m or more. Furthermore, when the foam sheet has a structure in which the outer layer is provided on both surfaces of the core layer, it is preferred that both outer layers are within the above range.

When the foam sheet has a structure in which the outer layer is provided on both surfaces of the core layer, the thicknesses of both outer layers may be the same or different, but are preferably the same.

When the foam sheet according to the present invention is a multilayer body including an outer layer, from the viewpoint of the foam sheet having excellent step followability and peelability, the ratio of the thickness of the core layer to the thickness of the outer layer (thickness of the core layer/thickness of each outer layer) is preferably 2.0 or more, more preferably 3.0 or more, further preferably 5.0 or more, and further preferably 8.0 or more, and is preferably 50 or less, more preferably 30 or less, and further preferably 20 or less. In the case of a multilayer body including an outer layer on both surfaces of a core layer, the thickness of the outer layer when calculating the above thickness ratio is the average value of the thickness of the outer layers on both surfaces.

<Methods for producing foam sheet>

Production methods when the foam sheet is a multilayer body having a core layer and an outer layer will now be described as first and second production methods below.

(First production method)

The method for producing the foam sheet according to the present invention is not particularly limited, and the foam sheet can be produced by, for example, laminating an outer layer on one or both surfaces of a layer composed of an expandable composition to obtain a laminate sheet, and then expanding the laminate sheet (hereinafter also referred to as the "first production method").

More specifically, the first production method includes the following steps I to II.

(I) A step of obtaining a laminate sheet that includes a layer composed of an expandable composition and an outer layer formed on one or both surfaces of the layer.

(II) A step of obtaining a foam sheet by expanding the layer composed of an expandable composition of the laminate sheet.

Each step will now be described below.

(Step (I))

The method for obtaining the laminate sheet in step (I) is not particularly limited, but is preferably carried out by coextrusion.

Specifically, when forming an outer layer on both surfaces of a layer made of an expandable resin composition, the resin for forming the outer layer and other optionally-added additives are fed to a first extruder and a third extruder, respectively, and melt-kneaded to obtain a resin composition for forming the outer layer. Furthermore, the resin for forming the core layer, a foaming agent such as a thermally decomposable foaming agent, and optionally-added additives are fed to a second extruder and melt-kneaded to obtain an expandable composition for forming the core layer.

Next, a laminate sheet having a three-layer structure can be obtained by merging the compositions fed from the first to third extruders so that the composition fed from the second extruder forms the middle layer, and extruding into a sheet using a T-die or the like. However, in the method for obtaining a laminate sheet having a three-layer structure, when the compositions of both the outer layers are the same, one extruder may be used instead of two extruders (the first and third extruders), and the resin compositions of both outer layers may be fed from that one extruder.

When forming an outer layer on one surface of the layer composed of an expandable composition, the resin for forming the outer layer and the other optionally-added additives are fed to a first extruder and melt-kneaded to obtain a resin composition for forming the outer layer. Furthermore, the resin for forming the core layer, a foaming agent such as a thermally decomposable foaming agent, and optionally-added additives are fed to a second extruder and melt-kneaded to obtain an expandable resin composition for forming the core layer. Next, a multilayer laminate sheet having a two-layer structure can be obtained by merging the resin composition fed from the first extruder with the composition fed from the second extruder, and extruding into a sheet using a T-die or the like.

In the coextrusion, either a feed block method or a multi-manifold method may be used, but the feed block method is preferable.

In the above-described method, it is preferred to further crosslink the laminate sheet after step (I). As the crosslinking method, an organic peroxide may be added in advance and the laminate sheet obtained in step (I) may be heated and crosslinked, but it is preferred to crosslink the laminate sheet by irradiating the sheet with ionizing radiation. Examples of the ionizing radiation include electron beams and β-rays, and electron beams are preferable.

The irradiation dose of the ionizing radiation is preferably from 1 to 10 Mrad, and more preferably from 1.5 to 5 Mrad. The crosslinking is preferably performed before step (II).

(Step (II))

In step (II), the laminate sheet obtained in step (I) is expanded by an expansion treatment to form a layer composed of the expandable composition. The layer composed of the expandable composition can be formed by performing a treatment such that the foaming agent expands, but when the foaming agent is a thermally decomposable foaming agent, the layer composed of the expandable composition can be expanded by heating the laminate sheet. The heating temperature may be equal to or higher than the temperature at which the thermally decomposable foaming agent decomposes, and is, for example, about 150 to 320°C.

Examples of the method of heating the laminate sheet include, but not particularly limited to, a method of heating the laminate sheet with hot air, a method of heating with infrared rays, a method of heating in a salt bath, and a method of heating in an oil bath. These methods may be used in combination.

In addition, the laminate sheet may be stretched as appropriate while or after expanding.

The above description has been given for the case where the outer layer is a resin film (a non-foam), but when the outer layer is a foam, a foaming agent such as a thermally decomposable foaming agent may be added as an additive to the resin composition for forming the outer layer, and the resulting mixture may be expanded in step (II).

(Second production method)

The foam sheet according to the present invention can also be produced by another method. Specifically, as an example of another method, a foam layer constituting the core layer may be produced in advance, and a resin film or foam layer constituting the outer layer may be superimposed on one or both surfaces of the foam layer and adhered thereto (also referred to as "second production method").

To obtain the foam in the second production method, the resin for forming the core layer, a thermally decomposable foaming agent, and the optionally-added additives may be melt-kneaded to obtain an expandable composition for forming the core layer, and the expandable composition may be formed into a sheet (expandable composition sheet). The method of melt-kneading the expandable composition and forming into a sheet shape is not particularly limited, but it is preferred to use an extruder.

The obtained expandable composition sheet is preferably further crosslinked before expanding, which will be described later. As the crosslinking method, an organic peroxide may be added in advance and the expandable composition sheet may be heated and crosslinked, but it is preferred to crosslink the expandable composition sheet by irradiating the sheet with ionizing radiation. The type and dose of the ionizing radiation are as described above for the first production method.

Next, the expandable composition sheet may be expanded. The layer composed of the expandable composition can be formed by performing a treatment such that the foaming agent expands, but when the foaming agent is a thermally decomposable foaming agent, the layer composed of the expandable composition can be expanded by heating the laminate sheet. The heating temperature and heating method are as described above for the first production method. In addition, the expandable composition sheet may be stretched as appropriate while or after expanding.

Then, a multilayer body can be obtained by superimposing a separately prepared resin film or a foam for constituting the outer layer on one or both surfaces of the foam layer constituting the base material layer, and adhering thereto. Specifically, thermocompression bonding may be performed by heating and pressurizing with a press or the like. Alternatively, a pressure-sensitive adhesive agent, an adhesive agent, or the like may be applied to an adhesion surface between the foam layer and the surface layer, or an adhesive double coated tape may be stuck to the adhesion surface, and the foam layer and the surface layer may be pasted together by the pressure-sensitive adhesive agent, adhesive agent, adhesive double coated tape, or the like. The foam for constituting the outer layer may be produced by the same method as the foam constituting the core layer, or may be produced by a different method.

[Pressure-sensitive adhesive tape]

The present invention also provides a pressure-sensitive adhesive tape in which the above-described foam sheet is used as a base material. The pressure-sensitive adhesive tape includes, for example, an pressure-sensitive adhesive material provided on at least one surface of the foam sheet. The pressure-sensitive adhesive tape can be adhered to another member via the pressure-sensitive adhesive material. The pressure-sensitive adhesive tape may have a pressure-sensitive adhesive material provided on both surfaces of the foam sheet, or have the pressure-sensitive adhesive material provided on one surface of the foam sheet. The pressure-sensitive adhesive tape is preferably used to fix a panel in a thin electronic device such as a television or a smartphone.

When the foam sheet is a multilayer body, the pressure-sensitive adhesive material is preferably provided on the outer layer constituting the multilayer body. For example, when the base material is a multilayer body that includes an outer layer on only one surface of the foam sheet, it is preferred that the pressure-sensitive adhesive tape is composed of a multilayer body 2 in which a foam sheet A, an outer layer B, and a pressure-sensitive adhesive material X are laminated in that order, as shown in Fig. 2. By using such a structure, the tensile strength of the overall pressure-sensitive adhesive tape is enhanced by the outer layer, the foam sheet is less likely to be damaged during peeling of the pressure-sensitive adhesive tape, and the pressure-sensitive adhesive tape can be easily peeled off without leaving any pressure-sensitive adhesive material on the adherend. Furthermore, when the outer layer is provided on both surfaces of the foam sheet, the pressure-sensitive adhesive material may be provided on only one surface of the foam sheet, or may be provided on both surfaces of the foam sheet, but it is preferred that the pressure-sensitive adhesive material is provided on both surfaces.

The pressure-sensitive adhesive material may be any material as long as it has at least a pressure-sensitive adhesive agent layer. The pressure-sensitive adhesive material may be a single pressure-sensitive adhesive agent layer laminated on the surface of a foam sheet, or may be a pressure-sensitive adhesive double coated sheet affixed to the surface of the foam sheet, but is preferably a single pressure-sensitive adhesive agent layer. The pressure-sensitive adhesive double coated sheet includes a base material and a pressure-sensitive adhesive agent layer provided on both surfaces of the base material. The pressure-sensitive adhesive double coated sheet is used to adhere one pressure-sensitive adhesive agent layer to the foam sheet and the other pressure-sensitive adhesive agent layer to another member.

The pressure-sensitive adhesive agent constituting the pressure-sensitive adhesive agent layer is not particularly limited, and for example, an acrylic pressure-sensitive adhesive agent, a urethane pressure-sensitive adhesive agent, and a rubber pressure-sensitive adhesive agent can be used. Furthermore, a release sheet such as release paper may be further pasted onto the pressure-sensitive adhesive material.

The thickness of the pressure-sensitive adhesive material is preferably from 5 to 200 $\mu$m, more preferably from 7 to 150 $\mu$m, and further preferably from 10 to 100 $\mu$m.

[Applications]

Applications of the foam sheet and the pressure-sensitive adhesive tape including the foam sheet are not particularly limited, but it is preferred to use the foam sheet or pressure-sensitive adhesive tape inside an electronic device. For example, the foam sheet or pressure-sensitive adhesive tape can be used as a fixing material for a panel and the like.

Examples of the electronic device include a television, a laptop personal computer, a mobile phone, a smartphone, a tablet, a portable electronic device such as a portable music device, a camera, a display, a game device, an electronic notebook, and a personal computer.

As described above, the foam sheet according to the present invention and the pressure-sensitive adhesive tape including the foam sheet have excellent peelability and also good step followability. Therefore, it is preferred to use the pressure-sensitive adhesive tape including the foam sheet for a display, especially a large display. Specifically, it is preferred to use the pressure-sensitive adhesive tape including the foam sheet for a display of 20 inches or more. The display may be a liquid crystal display or an organic EL display. Furthermore, when the pressure-sensitive adhesive tape including the foam sheet is used for a display, the pressure-sensitive adhesive tape including the foam sheet is used on the back surface or frame of the display, and is preferably used on the frame. Moreover, as described above, the pressure-sensitive adhesive tape according to the present invention has excellent step followability, so when the pressure-sensitive adhesive tape according to the present invention is used in a display, the pressure-sensitive adhesive tape according to the present invention can follow the step of the display housing, and as a result, an area of the gap between the pressure-sensitive adhesive tape and the housing can be reduced.

Furthermore, the pressure-sensitive adhesive tape including the foam sheet can be peeled off after being torn in the plane direction, and so when used in the above-described applications, for example, in a case where it is necessary to peel off the pressure-sensitive adhesive tape from a member inside the electronic device when repairing an electronic device, it is possible to peel off the pressure-sensitive adhesive tape without relying on the peeling technique of the operator, without placing a load on the members inside the electronic device, and without leaving any pressure-sensitive adhesive material on the member. Therefore, it is easy to reuse members such as the display.

Examples

The present invention will now be described in more detail with reference to the Examples, but the present invention is not limited to these examples in any way.

[Measurement methods]

The measurement and evaluation methods for each physical property were as follows.

<Thickness of core layer and outer layer>

A cross section of the foam sheet was photographed using a digital microscope (product name: VHX-900, manufactured by Keyence Corporation), and the thickness of each of the core layer and the outer layer was measured from the photographed image.

<Overall thickness (thickness of foam sheet)>

The overall thickness of the core layer and the outer layer was taken as the thickness of the foam sheet.

<Apparent density and expansion ratio>

The apparent density was measured in accordance with JIS K7222. Furthermore, the reciprocal of the apparent density ($g/cm^3$) was taken as the expansion ratio (times).

<Gel fraction>

About 100 mg of a test piece was collected from a foam constituting the core layer, and a mass A (mg) of the test piece was accurately weighed. Next, this test piece was immersed in 30 $cm^3$ of xylene at 120°C and left for 24 hours, then filtered through a 200 mesh wire mesh, the undissolved matter on the wire mesh was collected, vacuum dried, and accurately weighed as a mass B (mg) of the undissolved matter. From the obtained values, the gel fraction (% by mass) was calculated using the following formula. It is noted that the test piece was collected evenly along the thickness direction of the foam constituting the core layer.

$$\text{Gel fraction (\% by mass)}=100\times(B/A)$$

<Average cell size>

The foam constituting the core layer was cut into a 50 mm square, immersed in liquid nitrogen for 1 minute, then cut in the thickness direction along each of the MD and TD, and a 200x enlarged photograph was taken using a digital microscope (product name: VHX-900, manufactured by Keyence Corporation). In the foam of the photographed image, the cell size in the MD and ZD and the cell size in the TD and ZD were measured for all cells present in a 2 mm-long cut plane in each of the MD and the TD. This operation was repeated 5 times. The average value of the cell sizes of all the cells in each of the MD and TD was taken as the average cell size in the MD and TD, and the average value of all the cell sizes in the ZD measured by the above operation was taken as the average cell size in the ZD.

<Closed cell ratio>

The closed cell ratio was measured in accordance with the method in ASTM D2856 (1998).
Specifically, the closed cell ratio was measured in the following manner.
First, a square test piece having sides of 5 cm was cut out from the foam constituting the core layer. The thickness of the test piece was then measured to calculate an apparent volume $V_1$ of the test piece, and a weight $W_1$ of the test piece was also measured.
Next, a volume $V_2$ occupied by the cells was calculated based on the following expression. The density of the matrix resin constituting the test piece was taken to be $\rho$ (g/cm$^3$).

$$\text{Volume } V_2 \text{ occupied by cells} = V_1 - W_1/\rho$$

Next, a test piece was submerged in distilled water at 23°C to a depth of 100 mm from the water surface, and a pressure of 15 kPa was applied on the test piece for 3 minutes. The pressure in the water was then released, the test piece was allowed to stand for 1 minute, the test piece was then taken out of the water, the moisture attached to the surface of the test piece was removed, a weight $W_2$ of the test piece was measured, and a continuous cell ratio $F_1$ and a closed cell ratio $F_2$ were calculated based on the following expression.

$$\text{Continuous cell ratio } F_1 \text{ (\%)}=100\times(W_2-W_1)/V_2$$

$$\text{Closed cell ratio } F_2 \text{ (\%)}=100-F_1$$

<25% Compressive strength>

The 25% compressive strength was measured at a measurement temperature of 23°C using a method in accordance with JIS K 6767.

<Tensile strength>

The foam sheet produced in each of the Examples and Comparative Examples was cut into a dumbbell-shaped No. 1 test piece defined in JIS K6251 4.1. Using this test piece as a sample, tension was applied in the MD direction at a measurement temperature of 23°C and a speed of 500 mm/min using a tensile testing machine (product name: Tensilon RTF235, manufactured by A&D Company, Limited), and the tensile strength was measured.

<Breaking strength>

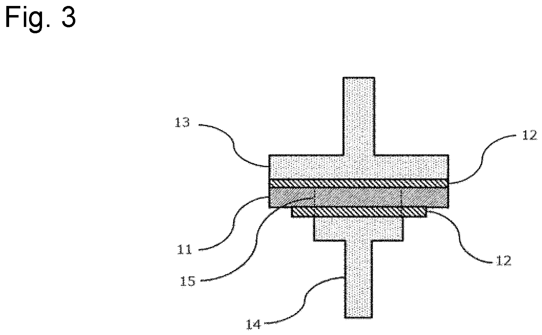

Fig. 3 is a schematic diagram illustrating a test apparatus for evaluating breaking strength as interlaminar strength. A primer ("PPX Primer" manufactured by Cemedine Co., Ltd.) was applied on a 25 mm-square area of a foam sheet 11 obtained in each Example and Comparative Example, then an adhesive agent 12 ("PPX" manufactured by Cemedine Co., Ltd.) with a diameter of 5 mm was dropped onto the center of the coated area. Immediately thereafter, a 25 mm-square aluminum jig 13 was placed on the portion where the adhesive agent had been dropped, and the foam sheet and the jig 13 were crimped. Then, the foam sheet was cut to the size of the jig 13. The primer was applied to the surface of the cut foam sheet to which the jig 13 was not adhered, and the adhesive agent 12 with a diameter of 5 mm was dropped onto the center of the applied area. Immediately thereafter, a 10 mm-square aluminum jig 14 was placed on the portion where the adhesive agent had been dropped, and the foam sheet and the jig 14 were crimped. The adhesive agent protruding around the jig 14 was wiped off, and then a cut 15 was made in the foam sheet to the size of the jig 14. The foam sheet were left at room temperature for 30 minutes to cure the adhesive agent, and used as a sample for measuring breaking strength.

Next, a 1 kN load cell was installed in a testing machine equipped with a thermostatic chamber ("Tensilon Universal Material Testing Machine" manufactured by A&D Company, Limited) so that the test could be conducted in a thermostatic chamber. The sample for measuring breaking strength was attached to the testing machine so that the sheet surface of the foam sheet was perpendicular to the tensile direction. After setting the temperature of the thermostatic chamber to 23°C, the sample for measuring breaking strength was left to stand until the temperature reached 23°C. One of the jigs was pulled vertically upward at a speed of 100 mm/min to peel off only a 1 cm-square area of the foam sheet. The breaking strength at this time was measured and taken as a first measurement result. The same operation was repeated three times, and the average value was taken as the breaking strength at 23°C.

<Sliceability>

A pressure-sensitive adhesive agent was applied on the foam sheet prepared in each Example and Comparative Example, the foam sheet was then sandwiched between SUS plates, the blade of a cutter (trade name "Folding Blade Cutter Knife" manufactured by OLFA) was inserted in the MD direction against the side face of the foam sheet, and the foam sheet was cut (sliced) by sliding the cutter in the MD direction. Sliceability was evaluated based on the level of progress of the cutter at that time. The evaluation criteria were as follows.

(Evaluation criteria)

A: Excellent (The cutter progressed to the end and was able to tear the foam sheet in two without generating resin debris.)
B: Good (The cutter progressed to the end and was able to tear the foam sheet in two, but resin debris was generated.)
C: The cutter did not progress to the end and was not able to tear the foam sheet in two.

<Evaluation of adhesive residue at the time of peeling>

After evaluating the sliceability as described above, the foam sheet after the slicing was peeled off from the SUS plate serving as an adherend, and the adhesive residue at the time of peeling was evaluated based on the amount of pressure-sensitive adhesive material remaining when the SUS plate was observed after the peeling. The evaluation criteria were as follows.

(Evaluation criteria)

A: The pressure-sensitive adhesive agent layer was not destroyed at the interface between the pressure-sensitive adhesive agent layer and the adherend, and the foam sheet after the slicing could be completely peeled off from the adherend.
B: Although the pressure-sensitive adhesive agent layer was broken in several places at the interface between the pressure-sensitive adhesive agent layer and the adherend, and a portion of the pressure-sensitive adhesive agent layer remained on the adherend, the foam sheet after the slicing could be peeled off to the end.
C: The pressure-sensitive adhesive agent layer was destroyed at the interface between the pressure-sensitive adhesive agent layer and the adherend, and the foam sheet after the slicing was torn or shredded and could not be completely peeled off.

<Overall evaluation>

An overall evaluation of the physical properties of the foam sheet was conducted based on the following evaluation criteria.

(Evaluation criteria)

A: A "C" evaluation result was not received in either the sliceability evaluation or the adhesive residue evaluation at the time of peeling evaluation.
B: A "C" evaluation result was received in at least one of the sliceability evaluation and the adhesive residue evaluation at the time of peeling evaluation.

[Example 1]

A linear low-density polyethylene resin obtained by using a metallocene catalyst (metallocene LLDPE, manufactured by Japan Polyethylene Corporation, trade name "Kernel KF283") as a resin for forming a core layer of the foam, and azodicarbonamide as a thermally decomposable foaming agent were prepared. Furthermore, zinc oxide (trade name "OW-212F" manufactured by Sakai Chemical Industry Co., Ltd.) as a decomposition temperature regulator, and 2,6-di-t-butyl-p-cresol, which is a phenolic antioxidant, as an antioxidant were prepared.
100 parts by mass of the linear low-density polyethylene resin (metallocene LLDPE), 4.5 parts by mass of the thermally decomposable foaming agent, 1 part by mass of the decomposition temperature regulator, and 0.5 parts by mass of the antioxidant were fed into a second extruder, and melt-kneaded at 130°C to produce an expandable resin composition for the core layer.
The same resin, decomposition temperature regulator, and antioxidant as for the core layer were prepared for the outer layer. 100 parts by mass of the linear low-density polyethylene resin (metallocene LLDPE), 1 part by mass of the decomposition temperature regulator, and 0.5 parts by mass of the antioxidant were fed into the first and third extruders and melt-kneaded at 130°C to produce a resin composition for the outer layer.
330 $\mu$m of the expandable resin composition was coextruded from the second extruder and 220 $\mu$m of the resin composition was coextruded from each of the first and third extruders to obtain an unfoamed laminate sheet including a layer composed of the expandable resin composition for the core layer and a layer composed of the resin composition for the outer layer laminated on both surfaces of the core layer.
Next, the laminate sheet was crosslinked by irradiating the laminate sheet with an electron beam of 4.0 Mrad at an acceleration voltage of 550 kV. The crosslinked laminate sheet was then continuously fed into a foaming furnace maintained at 250°C using hot air and an infrared heater, heated to expand, and stretched to a target thickness in a stretching step to obtain a foam sheet of Example 1 composed of a non-foam (outer layer)/foam (core layer)/non-foam (outer layer).

[Examples 2 and 3, Comparative Example 2]

A foam sheet was obtained in the same manner as in Example 1, except that the content of the foaming agent in the expandable resin composition was changed as shown in Table 1 (for Comparative Example 2, as shown in Table 2).

[Examples 4 and 5]

A foam sheet was obtained in the same manner as in Example 1, except that the expandable resin composition coextruded from the second extruder, the thickness of each resin composition coextruded from the first and third extruders, and the content of the foaming agent in the expandable resin composition were changed as shown in Table 1.

[Example 6]

A foam sheet was obtained in the same manner as in Example 1, except that the resin for forming the core layer was changed to a styrene thermoplastic elastomer (HYBRAR 7311F manufactured by Kuraray), and the content of the foaming agent in the expandable resin composition was changed as shown in Table 2.

[Example 7]

A foam sheet was obtained in the same manner as in Example 1, except that a urethane resin foam (trade name "Poron" manufactured by INOAC Corporation) and the non-foam (outer layer) were pasted together using an adhesive agent. It is noted that in Example 7, the gel fraction of the core layer was not measured.

[Comparative Example 1]

A foam sheet was obtained in the same manner as in Example 1, except that the expandable resin composition coextruded from the second extruder, the thickness of each resin composition coextruded from the first and third extruders, and the content of the foaming agent in the expandable resin composition were changed as shown in Table 2.

[Comparative Example 3]

A core layer was obtained in the same manner as in Example 1, except that the raw materials were not fed into the first and third extruders, a resin composition was not laminated on the layer composed of the expandable resin composition for the core layer, and the thickness of the expandable resin composition coextruded from the second extruder was changed as shown in Table 2.

[Table 1]

| Expandable composition blend (parts by mass) | | | Example 1 | | | Example 2 | | | Example 3 | | | Example 4 | | | Example 5 | | |
|---|---|---|---|---|---|---|---|---|---|---|---|---|---|---|---|---|---|
| | | | Outer layer B | Core layer A | Outer layer C | Outer layer B | Core layer A | Outer layer C | Outer layer B | Core layer A | Outer layer C | Outer layer B | Core layer A | Outer layer C | Outer layer B | Core layer A | Outer layer C |
| Polyolefin | | | 100 | 100 | 100 | 100 | 100 | 100 | 100 | 100 | 100 | 100 | 100 | 100 | 100 | 100 | 100 |
| Additive | Foaming agent | | - | 4.5 | - | - | 3.5 | - | - | 5.5 | - | - | 4.8 | - | - | 4.2 | - |
| | Decomposition temperature regulator | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Antioxidant | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Thickness (mm) of each layer before expansion | | | 0.215 | 0.33 | 0.215 | 0.215 | 0.33 | 0.215 | 0.215 | 0.33 | 0.215 | 0.18 | 0.28 | 0.28 | 0.38 | 0.57 | 0.38 |
| Overall thickness (mm) before expansion | | | | 0.76 | | | 0.76 | | | 0.76 | | | 0.74 | | | 1.33 | |
| Thickness (mm) of each layer before stretching | | | 0.053 | 0.66 | 0.053 | 0.067 | 0.583 | 0.067 | 0.045 | 0.711 | 0.045 | **0.045** | 0.56 | 0.045 | 0.095 | 1.14 | 0.095 |
| Overall thickness (mm) before stretching | | | | 0.766 | | | 0.717 | | | 0.801 | | | 0.65 | | | 1.33 | |

(continued)

| | | Example 1 | | | Example 2 | | | Example 3 | | | Example 4 | | | Example 5 | | |
|---|---|---|---|---|---|---|---|---|---|---|---|---|---|---|---|---|
| | | Outer layer B | Core layer A | Outer layer C | Outer layer B | Core layer A | Outer layer C | Outer layer B | Core layer A | Outer layer C | Outer layer B | Core layer A | Outer layer C | Outer layer B | Core layer A | Outer layer C |
| Physical properties of foam sheet | Thickness (mm) of each layer | 0.02 | 0.18 | 0.02 | 0.024 | 0.14 | 0.024 | 0.006 | 0.22 | 0.006 | 0.008 | 0.1 | 0.008 | 0.06 | 0.75 | 0.06 |
| | Overall thickness (mm) | | 0.22 | | | 0.188 | | | 0.232 | | | 0.116 | | | 0.87 | |
| | Thickness ratio (middle layer/top and bottom layers) | | 9 | | | 6 | | | 37 | | | 12.5 | | | 12.5 | |
| | Expansion ratio of each layer (times) | 1 | 8 | 1 | 1 | 5.5 | 1 | 1 | 10 | 1 | 1 | 8 | 1 | 1 | 8 | 1 |
| | Gel fraction (% by mass) | - | 36 | - | - | 40 | - | - | 35 | - | - | 36 | - | - | 36 | - |
| | Average cell size (μm) (MD) | - | 100 | - | - | 80 | - | - | 120 | - | - | 90 | - | - | 140 | - |
| | Average cell size (μm) (TD) | - | 120 | - | - | 95 | - | - | 135 | - | - | 110 | - | - | 150 | - |
| | Average cell size (μm) (ZD) | - | 40 | - | - | 30 | - | - | 48 | - | - | 35 | - | - | 55 | - |
| | Closed cell ratio (%) | - | 96 | - | - | 96 | - | - | 95 | - | - | 98 | - | - | 98 | - |
| | Apparent density (g/cm$^3$) of each layer | 1 | 0.13 | 1 | 1 | 0.18 | 1 | 1 | 0.10 | 1 | 1 | 0.13 | 1 | 1 | 0.13 | 1 |
| | Overall density (g/cm$^3$) of foam sheet | | 0.28 | | | 0.39 | | | 0.15 | | | 0.25 | | | 0.25 | |
| | 25% Compressive strength (kPa) | | 50 | | | 60 | | | 47 | | | 53 | | | 62 | |
| | Tensile strength (MPa) | | 3 | | | 8 | | | 1.9 | | | 1.5 | | | 4.7 | |
| | Breaking strength (MPa) | | 1.5 | | | 2.8 | | | 1 | | | 1.2 | | | 1.9 | |
| Evaluation item | Sliceability | | A | | | A | | | A | | | A | | | A | |
| | Evaluation of adhesive residue at the time of peeling | | A | | | A | | | B | | | A | | | A | |
| | Overall evaluation | | A | | | A | | | A | | | A | | | A | |

[Table 2]

| | | | Example 6 | | | Example 7 | | | Comparative Example 1 | | | Comparative Example 2 | | | Comparative Example 3 |
| | | | Outer layer B | Core layer A | Outer layer C | Outer layer B | Core layer A | Outer layer C | Outer layer B | Core layer A | Outer layer C | Outer layer B | Core layer A | Outer layer C | Expandable resin layer |
|---|---|---|---|---|---|---|---|---|---|---|---|---|---|---|---|
| Expandable composition blend (parts by mass) | | Polyolefin | 100 | | 100 | 100 | | 100 | 100 | 100 | 100 | 100 | 100 | 100 | 100 |
| | | Elastomer | | 100 | | | | | | | | | | | |
| | | Urethane | | | | | 100 | | | | | | | | |
| | Additive | Foaming agent | - | 3.9 | - | - | - | - | - | 4.5 | - | - | 3.0 | - | 2 |
| | | Decomposition temperature regulator | 1.0 | 1.0 | 1.0 | - | - | - | 1.0 | 1.0 | 1.0 | 1.0 | 1.0 | 1.0 | 1.0 |
| | | Antioxidant | 0.5 | 0.5 | 0.5 | - | - | - | 0.5 | 0.5 | 0.5 | 0.5 | 0.5 | 0.5 | 0.5 |
| Thickness (mm) of each layer before expansion | | | 0.215 | 0.33 | 0.215 | - | - | - | 0.042 | 0.28 | 0.042 | 0.215 | 0.33 | 0.215 | 0.05 |
| Overall thickness (mm) before expansion | | | | 0.76 | | - | - | - | | 0.364 | | | 1.364 | | 0.05 |
| Thickness (mm) of each layer before stretching | | | 0.065 | 0.59 | 0.065 | - | - | - | 0.011 | 0.56 | 0.011 | 0.085 | 0.524 | 0.085 | 0.3 |
| Overall thickness (mm) before stretching | | | | 0.72 | | - | - | - | | 0.582 | | | 0.694 | | 0.3 |

EP 4 692 187 A1

(continued)

| | | Example 6 | | | Example 7 | | | Comparative Example 1 | | | Comparative Example 2 | | | Comparative Example 3 |
|---|---|---|---|---|---|---|---|---|---|---|---|---|---|---|
| | | Outer layer B | Core layer A | Outer layer C | Outer layer B | Core layer A | Outer layer C | Outer layer B | Core layer A | Outer layer C | Outer layer B | Core layer A | Outer layer C | Expandable resin layer |
| Physical properties of foam sheet | Thickness (mm) of each layer | 0.02 | 0.18 | 0.02 | 0.02 | 0.5 | 0.02 | 0.003 | 0.18 | 0.003 | 0.02 | 0.12 | 0.02 | 0.2 |
| | Overall thickness (mm) | 0.22 | | | 0.54 | | | 0.186 | | | 0.16 | | | 0.2 |
| | Thickness ratio (middle layer/top and bottom layers) | 9 | | | 25 | | | 60 | | | 6 | | | - |
| | Expansion ratio of each layer | 1 | 8 | 1 | 1 | 6 | 1 | 1 | 8 | 1 | 1 | 4 | 1 | 8 |
| | Gel fraction (% by mass) | - | 27 | - | - | - | - | - | 33 | - | - | 40 | - | 30 |
| | Average cell size ($\mu$m) (MD) | - | 100 | - | - | 80 | - | - | 95 | - | - | 60 | - | 95 |
| | Average cell size ($\mu$m) (TD) | - | 120 | - | - | 95 | - | - | 110 | - | - | 75 | - | 115 |
| | Average cell size ($\mu$m) (ZD) | - | 40 | - | - | 60 | - | - | 35 | - | - | 18 | - | 35 |
| | Closed cell ratio (%) | - | 95 | - | - | 45 | - | - | 94 | - | - | 94 | - | 97 |
| | Apparent density (g/cm$^3$) of each layer | 1 | 0.13 | 1 | 1 | 0.167 | 1 | 1 | 0.13 | 1 | 1 | 0.25 | 1 | 0.125 |
| | Overall density (g/cm$^3$) of foam sheet | 0.28 | | | 0.23 | | | 0.15 | | | 0.44 | | | 0.13 |
| | 25% Compressive strength (kPa) | 43 | | | 25 | | | 90 | | | 100 | | | 45 |
| | Tensile strength (MPa) | 2.2 | | | 1.2 | | | 0.6 | | | 9 | | | 0.4 |
| | Breaking strength (MPa) | 0.9 | | | 2.4 | | | 0.5 | | | 3.8 | | | low |
| Evaluation item | Sliceability | B | | | B | | | A | | | C | | | A |
| | Evaluation of adhesive residue at the time of peeling | A | | | B | | | C | | | A | | | C |
| | Overall evaluation | A | | | A | | | B | | | B | | | B |

EP 4 692 187 A1

22

As is clear from the above Examples, the foam sheets that met the requirements of the present invention could exhibit excellent peelability because the foam sheets could be torn in the plane direction, and no pressure-sensitive adhesive material remained on the adherend when peeled off.

On the other hand, the foam sheets produced in Comparative Examples 1 and 3 had a low tensile strength, so the foam sheets tore during peeling, resulting in a pressure-sensitive adhesive material remaining on the adherend. In addition, the foam sheet produced in Comparative Example 2 had a high breaking strength, so the sheet did not tear in the plane direction and could not exhibit excellent peelability.

Reference Signs List

| | |
|---|---|
| 1 | multilayer body |
| 2 | adhesive sheet |
| A | core layer (foam) |
| B, C | outer layer |
| X | pressure-sensitive adhesive material |
| 11 | foam sheet |
| 12 | adhesive agent |
| 13 | jig |
| 14 | jig |
| 15 | notch |

**Claims**

1. A foam sheet having a tensile strength of from 1 to 9 MPa and a breaking strength when an interlaminar strength is measured of 3.5 MPa or less,
   the foam sheet having an overall thickness of from 0.05 to 0.9 mm.

2. The foam sheet according to claim 1, wherein the foam sheet has a 25% compressive strength of 150 kPa or less.

3. The foam sheet according to claim 1, wherein the foam sheet has an overall density of from 0.07 to 0.60 g/cm$^3$.

4. The foam sheet according to claim 1, comprising:

   a core layer which is a foam; and
   an outer layer that is provided on both surfaces of the core layer and is a foam having an expansion ratio lower than that of the core layer or is a non-foam.

5. The foam sheet according to claim 4, wherein the expansion ratio of the core layer is from 5 to 20 times.

6. The foam sheet according to claim 4, wherein a thickness ratio of the core layer to the outer layer (thickness of the core layer/average thickness of the outer layer) is 2 or more.

7. The foam sheet according to claim 4, wherein the core layer has a closed cell ratio of 90% or more.

8. The foam sheet according to claim 4, wherein each of the outer layers has a thickness of 5 $\mu$m or more.

9. The foam sheet according to claim 4, wherein an average cell size of cells in the core layer is from 20 to 500 $\mu$m.

10. The foam sheet according to claim 4, wherein the core layer is a crosslinked foam.

11. The foam sheet according to claim 10, wherein the core layer has a gel fraction of from 20 to 50% by mass.

12. The foam sheet according to claim 4, wherein a resin constituting the core layer is at least one selected from the group consisting of a polyolefin resin, a urethane resin, an acrylic resin, and an elastomeric resin.

13. A pressure-sensitive adhesive tape comprising the foam sheet according to any one of claims 1 to 12 and a pressure-sensitive adhesive material provided on at least one surface of the foam sheet.

Fig. 1

1

B

A

C

Fig. 2

2

X

B

A

Fig. 3

## INTERNATIONAL SEARCH REPORT

| International application No. |
| --- |
| **PCT/JP2024/013350** |

### A. CLASSIFICATION OF SUBJECT MATTER

***C08J 9/04***(2006.01)i; ***B32B 5/18***(2006.01)i; ***B32B 7/022***(2019.01)i; ***B32B 27/00***(2006.01)i; ***C08J 9/02***(2006.01)i; ***C09J 7/26***(2018.01)i; ***C09J 7/29***(2018.01)i; ***C09J 201/00***(2006.01)i

FI:　C08J9/04 CES; B32B5/18; B32B7/022; B32B27/00 M; C08J9/02; C09J7/26; C09J7/29; C09J201/00

According to International Patent Classification (IPC) or to both national classification and IPC

### B. FIELDS SEARCHED

Minimum documentation searched (classification system followed by classification symbols)

C08J9/00-9/42; B32B1/00-43/00; C09J7-00-7/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2020-138494 A (SEKISUI CHEMICAL CO., LTD.) 03 September 2020 (2020-09-03) whole document, in particular, claims, paragraphs [0038]-[0062], fig. 1 | 1-13 |
| A | JP 2020-200410 A (SEKISUI CHEMICAL CO., LTD.) 17 December 2020 (2020-12-17) whole document, in particular, claims, examples | 1-13 |
| A | WO 2019/189452 A1 (SEKISUI CHEMICAL CO., LTD.) 03 October 2019 (2019-10-03) whole document | 1-13 |
| A | JP 2022-131586 A (SEKISUI CHEMICAL CO., LTD.) 07 September 2022 (2022-09-07) whole document | 1-13 |
| A | JP 2019-157010 A (SEKISUI CHEMICAL CO., LTD.) 19 September 2019 (2019-09-19) whole document | 1-13 |
| A | JP 2022-094735 A (DIC CORPORATION) 27 June 2022 (2022-06-27) whole document | 1-13 |

☑ Further documents are listed in the continuation of Box C.  ☑ See patent family annex.

\*　Special categories of cited documents:
"A"　document defining the general state of the art which is not considered to be of particular relevance
"D"　document cited by the applicant in the international application
"E"　earlier application or patent but published on or after the international filing date
"L"　document which may throw doubts on priority claim(s) or which is cited to establish the publication date of another citation or other special reason (as specified)
"O"　document referring to an oral disclosure, use, exhibition or other means
"P"　document published prior to the international filing date but later than the priority date claimed

"T"　later document published after the international filing date or priority date and not in conflict with the application but cited to understand the principle or theory underlying the invention
"X"　document of particular relevance; the claimed invention cannot be considered novel or cannot be considered to involve an inventive step when the document is taken alone
"Y"　document of particular relevance; the claimed invention cannot be considered to involve an inventive step when the document is combined with one or more other such documents, such combination being obvious to a person skilled in the art
"&"　document member of the same patent family

| Date of the actual completion of the international search | Date of mailing of the international search report |
| --- | --- |
| **10 June 2024** | **25 June 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2024/013350** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2015/098494 A1 (DIC CORPORATION) 02 July 2015 (2015-07-02)<br>whole document | 1-13 |

Form PCT/ISA/210 (second sheet) (July 2022)

## INTERNATIONAL SEARCH REPORT
### Information on patent family members

| International application No. |
| --- |
| **PCT/JP2024/013350** |

| Patent document cited in search report | | | Publication date (day/month/year) | Patent family member(s) | | | Publication date (day/month/year) |
| --- | --- | --- | --- | --- | --- | --- | --- |
| JP | 2020-138494 | A | 03 September 2020 | (Family: none) | | | |
| JP | 2020-200410 | A | 17 December 2020 | (Family: none) | | | |
| WO | 2019/189452 | A1 | 03 October 2019 | JP | 2019-171819 | A | |
| | | | | JP | 2019-177668 | A | |
| | | | | KR | 10-2020-0138235 | A | |
| | | | | CN | 112074403 | A | |
| | | | | TW | 201942284 | A | |
| JP | 2022-131586 | A | 07 September 2022 | US | 2023/0382082 | A1 | |
| | | | | whole document | | | |
| | | | | WO | 2022/080219 | A1 | |
| | | | | EP | 4230399 | A1 | |
| | | | | CN | 116348292 | A | |
| | | | | KR | 10-2023-0087477 | A | |
| JP | 2019-157010 | A | 19 September 2019 | (Family: none) | | | |
| JP | 2022-094735 | A | 27 June 2022 | CN | 114634772 | A | |
| WO | 2015/098494 | A1 | 02 July 2015 | US | 2016/0339672 | A1 | |
| | | | | whole document | | | |
| | | | | KR | 10-2016-0102185 | A | |
| | | | | CN | 105829473 | A | |
| | | | | TW | 201533208 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016194957 A1
- WO 2022080219 A1
- WO 2022030649 A1